# EUROPEAN PATENT APPLICATION

(11) **EP 4 679 416 A1**
(43) Date of publication of application: **14.01.2026**
(21) Application number: 25188880.6
(22) Date of filing: 10.07.2025
(51) Int. Cl.: G10L 13/033, G10L 15/16, G10L 15/26, G10L 25/30, G10L 13/047, G10L 13/08, G10L 19/00

(54) **A SYSTEM AND A METHOD FOR PROVIDING VOICE COMMUNICATION WITH EFFICIENT BANDWIDTH UTILIZATION**

(30) Priority: 11.07.2024 IL 31426924
(71) Applicant: Deutsche Telekom AG, 53113 Bonn (DE)
(72) Inventor: MIMRAN, David, 6215505 Tel Aviv (IL); SHABTAI, Asaf, 7684200 Hulda (IL); BRODT, Oleg, 8471621 Beer Sheva (IL); ELOVICI, Yuval, 7986400 Arugot (IL); TAMIR, Inbar, 3844723 Hadera (IL); AVIV, Yuval Renny, 8496500 Omer (IL); HOLSCHKE, Oliver, 10969 Berlin (DE); PLACHY, Jan, 14055 Berlin (DE)
(74) Representative: Schmidt, Christian

(57) **Abstract**

A system for providing voice communication with efficient bandwidth utilization, comprising a sender's terminal device for receiving speech signals as an input from a sender; an Al-based Speech-To-Text (STT) conversion model, on the sender's terminal device, for generating a text transcription of the input speech signals, the sender's terminal device is adapted to transmit the text transcription to a receiver's terminal device, over a data communication network; a receiver's terminal device being adapted to receive the transmitted text transcription and generate synthesized speech reconstruction of the speech signals using an Al-based Text-To-Speech (TTS) conversion model, running on the receiver's terminal device.

## Description

### Field of the Invention

The present invention relates to the field of bandwidth-efficient voice-based communication. More particularly, the invention relates to a method and system for providing voice communication with efficient bandwidth utilization, using speech-to-text transformation, textual transmission and text-to-speech synthesized speech reconstruction.

### Background of the Invention

The demand for efficient and cost-effective voice communication solutions has been intensified with the global expansion of mobile devices and the proliferation of traditional, as well as satellite-based networks. This demand is further enhanced in scenarios where the bandwidth is limited, such as in satellite communications, or in regions with limited network infrastructure.

Traditional voice communication systems, such as telephony or Voice over Internet Protocol (VoIP) based technologies, primarily operate by transmitting analog or digital voice signals directly over communication networks. This approach, while being effective for real-time communication, often require significant bandwidth, particularly when high-quality or multichannel audio are required.

Current methods to address bandwidth constraints primarily focus on compressing audio data using various codecs (devices or computer programs that encode and decode digital data streams or signals). These technologies reduce the data size of voice transmissions but despite advancements in audio compression, these methods still transmit voice as audio data, which inherently consumes more bandwidth, compared to textual data.

Therefore, there is a need for a different approach to voice communication that minimizes bandwidth usage, while maintaining the fidelity and personal nuances of the speaker's voice.

It is, therefore, an object of the present invention to provide a method and system for voice communications over text, which minimizes the bandwidth usage.

It is another object of the present invention to provide a method and system for voice communications over text, which maintains the fidelity and personal nuances of the speaker's voice.

It is a further object of the present invention to provide a method and system for voice communications over text, which preserves the speaker's voice characteristics.

It is a further object of the present invention to provide a method and system for voice communications over text, which enhances the adaptability and efficiency of voice communications across various network conditions.

Other objects and advantages of the invention will become apparent as the description proceeds.

### Summary of the Invention

A method for providing voice communication with efficient bandwidth utilization, comprising:
a) receiving speech signals from a sender, as input to a sender's terminal device;
b) using Al-based Speech-To-Text (STT) conversion on sender's terminal device, to generate a text transcription of the input speech signals;
c) transmitting the text transcription to a receiver's terminal device, over a data communication network; and
d) using Al-based Text-To-Speech (TTS) conversion on the receiver's terminal device, to generate synthesized speech reconstruction of the speech signals.

The sender's voice characteristics may be preserved by:
a) transmitting the sender's speech metadata to the a receiver's terminal device, along with the text transcription; and
b) generating the synthesized speech reconstruction of the speech signals, based on the received text transcription and the metadata.

The text transcription may be generated in real-time, for conducting a voice call between the sender and the receiver.

The text transcription may be generated offline, for conducting a voice messaging between the sender and the receiver.

Fine-tuning of the STT and TTS models may be performed for:
a) specific languages;
b) specific accents;
c) specific domains.

The data communication network may be selected from the group of:
- mobile networks;
- VoIP systems;
- satellite communication networks.

The metadata may be obtained by performing feature extraction of the voice characteristics of the sender, by the Al model at the sender's side.

The receiver's terminal device may be connected to emergency services The STT and the TTS models may be integrated with text-based collaboration tools, such as instant messaging and document sharing platforms.

The offline voice messaging may be applied to voice assistants and smart home devices.

The Speech-to-Text (STT) model may be trained on a diverse dataset of speakers with various accents, languages, and voice characteristics to ensure accurate transcription across a wide range of users and spoken languages.

The Speech-to-Text (STT) model may employ Al based techniques, such as Recurrent Neural Networks (RNNs) or transformer-based architectures, implemented as a single model, or as a series of interconnected models.

A voice profile that captures the unique characteristics of the sender's voice may also be created.

The voice profile may be stored on the sender's device and sent to the receiver on demand during a call.

The receiver's terminal device may be configured to maintain a list of voice profiles for his contacts.

A third party may store voice profiles of all subscribers in a centralized database, to be sent to the receiver's device on demand, upon establishing a call.

The text transcription may be compressed and packaged before transmission.

The provided metadata may be utilized by the TTS model, to reconstruct the speaker's voice, including prosody, intonation, and emotional cues.

The communications may be protected by encrypting the text transcript and metadata before transmission.

A method for providing voice communication with efficient bandwidth utilization, comprising:
a) receiving speech signals from a sender, as input to a sender's terminal device;
b) using Al-based Speech-To- Speech (STS) conversion model on sender's terminal device, to generate an interim Speec to Embeddings (S2E) of the input speech signals;
c) transmitting the interim Speec to Embeddings (S2E) to a receiver's terminal device, over a data communication network; and
d) using the Al-based Speech-To- Speech (STS) conversion model and Embedding to Speech (E2S) conversion, to generate, on the receiver's terminal device, synthesized speech reconstruction of the speech signals,
wherein communication between the receiver's and the sender's terminal devices encodes binary embeddings as text.

A method for providing voice communication with efficient bandwidth utilization, comprising:
a) receiving speech signals from a sender, as input to a sender's terminal device;
b) encoding/compressing the voice content at the sender's terminal device;
c) transmitting the encoded/compressed voice content to a receiver's terminal device, over a data communication network; and
d) on the receiver's terminal device, decoding the encoded/compressed voice content, to reconstruct the speech signals.

Encoding/compressing of the voice content, may be implemented using STT and TTS models, or embedding using an STS model.

A system for providing voice communication with efficient bandwidth utilization, comprising:
a) a sender's terminal device for receiving speech signals as an input from a sender;
b) an Al-based Speech-To-Text (STT) conversion model, on the sender's terminal device, for generating a text transcription of the input speech signals, the sender's terminal device is adapted to transmit the text transcription to a receiver's terminal device, over a data communication network; and
c) a receiver's terminal device being adapted to receive the transmitted text transcription and generate synthesized speech reconstruction of the speech signals using an Al-based Text-To-Speech (TTS) conversion model, running on the receiver's terminal device.

### Brief Description of the Drawings

The above and other characteristics and advantages of the invention will be better understood through the following illustrative and non-limitative detailed description of preferred embodiments thereof, with reference to the appended drawings, wherein:
- Fig. 1A shows an example where the system is used over satellite communications and a telco network, according to an embodiment of the invention;
- Fig. 1B shows the process of transmitting text transcriptions of an audio input of a sender to a receiver using Al-based voice-to-text and text-to-voice for preserving the sender's voice characteristics, according to an embodiment of the invention; and
- Fig. 2 shows an example where the system is used over satellite communications and a telco network that is connected to emergency services, according to an embodiment of the invention.

### Detailed Description of the Invention

The present invention provides a method and system for allowing efficient voice communications over text, using speech-to-text and text-to-speech transformations. The proposed method minimizes bandwidth usage, while maintaining the fidelity and personal nuances of the speaker's voice, by utilizing a dual-model Al system comprising a Speech-to-Text (STT) model on the sender's side and a Text-to-Speech (TTS) model on the receiver's side. As a result, the communication networks between the sender and receiver transports the text transcript of the conversation, rather than the audio itself (that may be compressed or not). This approach not only offers substantial reductions in bandwidth consumption, but also enhances the adaptability and efficiency of voice communications across various network conditions.

The system uses a speech-to-text model at the sender's side (which is being run on a computerized device with at least one processor and associated memory), to convert spoken words into text, which is then transmitted over a data network to a receiver. At the receiver's side, a text-to-speech model (which is being run on a computerized device with at least one processor and associated memory) reconstructs the original speech, while optionally preserving the sender voice patterns using a voice profile of the sender, thereby significantly reducing the bandwidth required for voice transmission.

The proposed method of the present invention provides a transformative approach to voice communication, and leverages Al-driven Speech-to-Text and Text-to-Speech models, such as Notta Al (by Notta Inc., Tokyo, Japan, - an Al transcription tool designed to transcribe and translate audio and video content into text. Notta Al converts spoken words and transcribed files into text quickly and accurately) to minimize the bandwidth usage, while preserving the speaker's voice characteristics. By transmitting text instead of audio and utilizing the speaker's metadata, the system achieves significant bandwidth optimization, scalability, and adaptability across various network conditions and user scenarios. The invention supports both real-time (e.g., voice call) and non-real-time (e.g., voice messaging) use cases, making the proposed method and system suitable for a wide range of communication scenarios.

The proposed method offers significant adaptability and customization options. The STT and TTS models can be fine-tuned for specific languages, accents, or domains, thereby enabling efficient communication across diverse user groups and scenarios.

The proposed system can also be integrated into existing communication infrastructures, such as mobile networks, Voice over Internet Protocol (VoIP - is a technology that allows making phone calls over the internet instead of traditional landlines) systems, or satellite communication networks. The text-based transmission approach allows seamless interoperability with text-based messaging systems, thereby enabling unified communication solutions.

By transmitting text instead of audio, the method proposed by the present invention achieves substantial reductions in bandwidth consumption. Textual data requires significantly less bandwidth compared to audio data, even when being compressed using advanced codecs. This bandwidth optimization enables efficient voice communication in low-bandwidth environments or over congested networks and can increase the quality of the voice transmission.

The proposed method has a wide range of applications across various domains. In the telecommunications field, it can be deployed to enhance voice communication efficiency and reduce bandwidth costs, particularly in regions with limited network infrastructure or in satellite communication scenarios

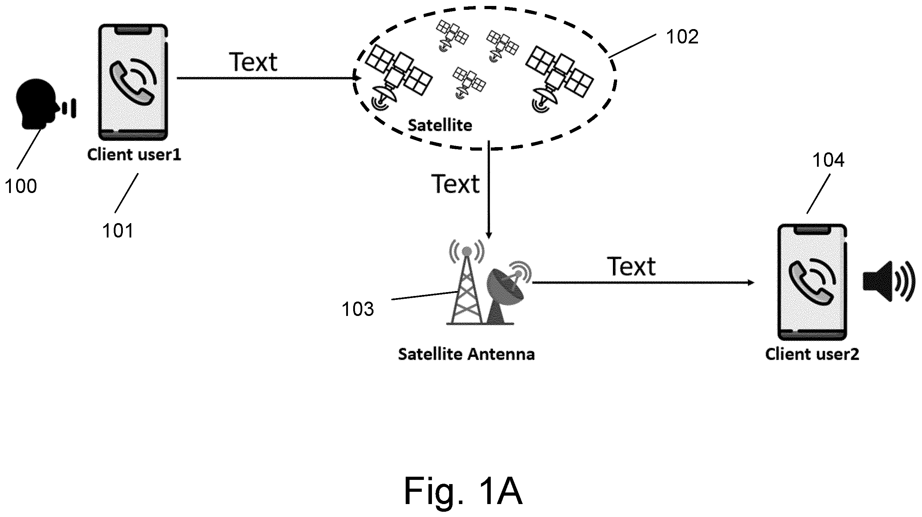

Fig. 1A shows an example where the proposed system is used over satellite communications and a telco network (a network of a telecommunications or communication service provider company that transports information electronically through telephony and data communication services in the networking industry), according to an embodiment of the invention. A user 100 (the sender) inputs voice content to a mobile device 101 which is connected to a constellation of communication satellites over a data network. At the sender's mobile device 101, the voice inputs provided by user 100 are converted (offline or in real-time) to textual data by an Al-based voice-to-text transcription service that is installed on the sender's mobile device 101 and supports many languages. It is possible to obtain automated transcription of the input audio offline by recording audio and uploading files, or alternatively online, where the audio input is converted to a text transcription in real-time. The text transcription is transmitted to ground via a satellite station 103 which may be connected to a telco network (such as a mobile network), which transmits the text transcription to the receiver 104. At the receiver's mobile device 104, the received text transcriptions are converted (offline or in real-time) back to audio by an Al-based text-to-voice transcription service that is installed on the receiver's mobile device 104 and supports the same languages, such that the received is able to hear the sender, similar to a conventional voice conversation.

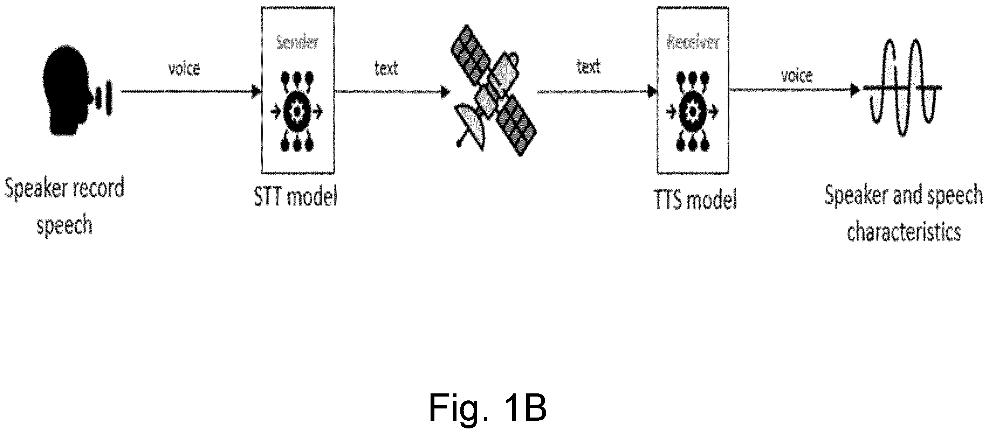

Fig. 1B shows the process of transmitting text transcriptions of an audio input of a sender to a receiver, using Al-based voice-to-text and text-to-voice for preserving the sender's voice characteristics, according to an embodiment of the invention. The Al-based voice-to-text and text-to-voice transcription services allow increasing the conversion accuracy by performing appropriate training of the Al model at the sender's and the receiver's sides. In addition, the Al model at the sender's side performs feature extraction of the voice characteristics of the sender, such that the Al model at the receiver's side synthesizes the received text transcription to voice, with similar voice characteristics. This allows the receiver to hear the sender in a more natural manner, like he used to when having a conventional voice call (otherwise, the synthesized speech will sound more artificial, even though accurate).

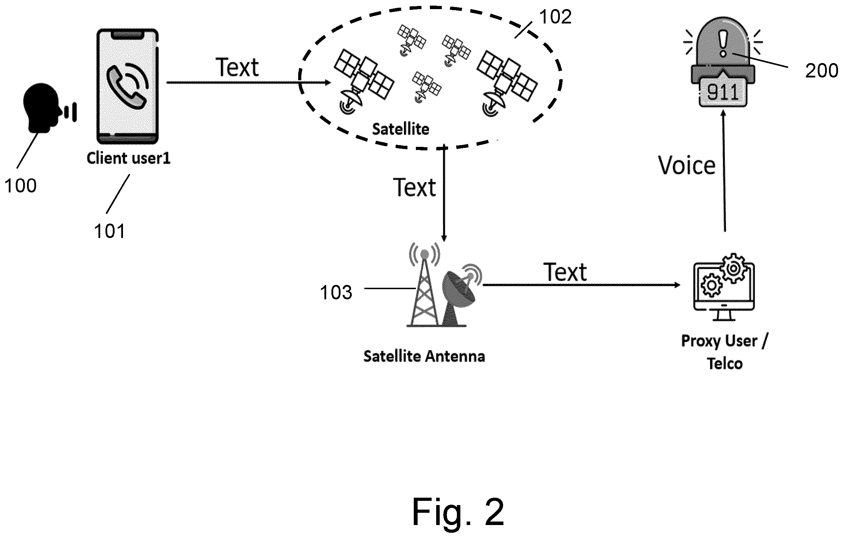

Fig. 2 shows an example where the system is used over satellite communications and a telco network that is connected to emergency services, according to an embodiment of the invention. In this example, reliable communication between the sender 100 and the emergency service 200 (such as 911 - an emergency code throughout the United States) is critical. Using the proposed method, reliable communication is ensured, even tough bandwidth is often constrained.

In the realm of business and enterprise communication, the invention can be integrated with existing VoIP and unified communication solutions to optimize bandwidth utilization and reduce communication costs. The speech to text and text to speech-based approach also enables integration with text-based collaboration tools, such as instant messaging and document sharing platforms.

Furthermore, the invention may be applied to the field of voice assistants (software applications that can understand and respond to spoken commands, enabling users to interact with devices and services using voice) and smart home devices (electronic devices, often internet-connected, that automate and control various aspects of a home environment). By using the STT and TTS models, voice interactions with these devices can be made more efficient and bandwidth-optimized.

The present invention proposes a novel voice communication system that leverages Artificial Intelligence (AI) to minimize bandwidth usage while preserving the speaker's voice characteristics. The system components are:

### Speech-to-Text (STT) Model:

The STT model is deployed on the sender's mobile device or a communication terminal. When the sender speaks, the STT model captures the audio input and converts it into a text transcript in real-time (or alternatively, offline by creating an audio file). The STT model is trained on a diverse dataset of speakers with various accents, languages, and voice characteristics to ensure accurate transcription across a wide range of users and spoken languages.

The STT model employs Al based techniques, such as Recurrent Neural Networks (RNNs - a type of artificial neural network designed to process sequential data, like text, speech, or time series, where the order of elements is crucial. Unlike traditional neural networks, RNNs have loops in their architecture, allowing them to maintain a hidden state that acts as memory, enabling them to consider previous inputs when processing the current input) or transformer-based architectures (a type of deep learning model that have revolutionized natural language processing and are increasingly used in computer vision and other fields), to process the audio input by a computerized device with at least one processor and associated memory) and generate (by the computerized device) an accurate corresponding text. The model is optimized for low-latency processing (systems and networks that are designed to minimize the delay between a user action and the system's response, enabling near real-time interaction), thereby enabling near-instantaneous conversion of speech to text. The STT Model can be implemented as a single model, or as a series of interconnected models.

In order to preserve the speaker's voice characteristics and enhance the fidelity of the synthesized speech, the system utilizes speech metadata extracted from the sender's voice. This metadata captures key attributes such as prosody, intonation, and emotional cues (non-verbal and verbal signals that reveal a person's feelings, thoughts, or reactions).

There are several methods to obtain and transmit this speech metadata:
a. Real-time Extraction: During the call, as the sender starts speaking, the STT model (or another model) installed on the sender's device can extract the speech metadata in real-time. This speech metadata is then encoded and transmitted alongside the text transcript to the receiver's device.
b. Voice Profile Enrollment: Alternatively, the sender can enroll to the service in advance and create a "voice profile" during the enrollment process. This voice profile captures the unique characteristics of the sender's voice. The voice profile can be stored on the sender's device and sent to the receiver on demand during a call.
c. Contact-based Profile Storage: The receiver's device can maintain a list of voice profiles for their contacts.
d. Centralized Profile Storage: In another embodiment, a third party, such as the operator of the communication network can store voice profiles of all subscribers in a centralized database. When a call is established, the network facilitates the transfer of the sender's voice profile to the receiver's device on demand.
e. Default Profile: alternatively, the system can be configured to utilize a default voice, regardless the sender. In this case, extracting and transferring the speaker's voice metadata is not required.

The choice of metadata delivery method depends on factors such as privacy considerations, device processing and storage capabilities, and network infrastructure. The system can be designed to support one or more of these methods, thereby providing flexibility and adaptability to different user preferences and network conditions.

### Text Transmission:

Once the STT model generates the text transcript (and optionally the associated metadata), this data is transmitted over the communication network - whether terrestrial or not - to the receiver's device. By transmitting text instead of audio, the system significantly reduces the bandwidth required for voice communication.

The text data is compressed and packaged using standard protocols such as UTF-8 encoding (a character encoding that represents text in a way that's compatible with both Unicode and ASCII. It's a variable-width encoding, meaning it uses one to four bytes to represent a character, with ASCII characters, using only one byte). The metadata, if transmitted separately, is also compressed and attached to the text data. The combined data package is then transmitted using standard communication protocols, such as Transmission Control Protocol/Internet Protocol (TCP/IP) or User Datagram Protocol (UDP - is a communication protocol that prioritizes speed and efficiency over reliability in network communication), depending on the network infrastructure.

### Text-to-Speech (TTS) Model:

On the receiver's device, a TTS model is deployed to convert the received text transcript back into speech. The TTS model is pre-trained on a large corpus of speech data, thereby covering a wide range of voice characteristics, accents, and emotions.

Upon receiving the text data package and the associated speech metadata, the TTS model extracts the text transcript and the speaker's voice characteristics. The model then synthesizes speech from the text, using Al techniques. The TTS Model can be implemented as a single model, or as a series of interconnected models.

The TTS model utilizes the provided speech metadata to reconstruct the speaker's voice, including prosody, intonation, and emotional cues. This ensures that the synthesized speech closely resembles the original speaker's voice, preserving the personal nuances and fidelity of the communication.

Alternatively, an Al-based Speech-To- Speech (STS) conversion model and an audio embedding model (a type of model designed to turn audio data into a numerical, or vector value, known as an embedding. These embeddings capture important features in the audio, allowing other models to learn more efficiently) are used. The Al-based Speech-To- Speech (STS) conversion model on sender's terminal device (such as a smartphone or any device used for communicating with a receiver) generates an interim Speec to Embeddings (S2E - the process of converting spoken audio into numerical representations called embeddings. These embeddings capture meaningful features of the speech, such as tone, rhythm, and semantic content, allowing machines to understand and process spoken language) of the input speech signals. Then, the interim Speec to Embeddings (S2E) is transmitted to a receiver's terminal device (such as a smartphone any device used for communicating with a sender), over a data communication network and the Al-based Speech-To- Speech (STS) conversion model and Embedding to Speech (E2S) conversion, are used to generate synthesized speech reconstruction of the speech signals, on the receiver's terminal device. Communication between the receiver's and the sender's terminal devices encodes binary embeddings (a type of vector representation in which each dimension is encoded using a single binary digit, typically represented as either 0 or 1) as text.

The system and method of the invention supports both real-time and non-real-time use cases.

For real-time use cases, such as voice calls, the STT model converts the sender's speech into text, which is then transmitted to the receiver's device in near real-time. On the receiver's end, the TTS model synthesizes speech from the received text, thereby enabling a smooth conversation flow.

In non-real-time use cases, such as voice messaging, the invention offers additional benefits. The sender can record their voice message, which is then processed by the STT model to generate a text transcript. The text transcript, along with the associated speech metadata, can be stored and forwarded to the recipient at a later time. The recipient's device, upon receiving the text message, can use the TTS model to convert it back into speech at their convenience.

The non-real-time use case allows for asynchronous communication, where the sender and receiver do not need to be available simultaneously.

### Privacy and Security

The invention incorporates privacy and security measures to protect the user communications. The text transcript and speech metadata are encrypted using standard encryption protocols, such as Advanced Encryption Standard (AES - is a symmetric block cipher widely used for encrypting and decrypting electronic data, used as a standard for protecting sensitive information, both in storage and during transmission) or Rivest-Shamir-Adleman cryptosystem (RSA - is a widely used public-key cryptosystem for secure data transmission), before transmission. This ensures that the communication remains confidential and secure, even if intercepted by unauthorized parties.

Additionally, the system can implement user authentication and access control mechanisms to verify the identity of the communicating parties and prevent unauthorized access to the communication channels.

As various embodiments and examples have been described and illustrated, it should be understood that variations will be apparent to one skilled in the art without departing from the principles herein. Accordingly, the invention is not to be limited to the specific embodiments described and illustrated in the drawings.

In the following, a set of items is disclosed. The items are numbered to facilitate referencing the features of one item in other items. The items form part of the present disclosure and could be made subject to independent and/or dependent claims irrespective of what currently is claimed in the application. We note, however, that the scope of protection is defined by the appended claims, where the following items do not constitute claims. The items are:
1. A method for providing voice communication with efficient bandwidth utilization, comprising:
   a) receiving speech signals from a sender, as input to a sender's terminal device;
   b) using Al-based Speech-To-Text (STT) conversion on sender's terminal device, to generate a text transcription of said input speech signals;
   c) transmitting said text transcription to a receiver's terminal device, over a data communication network; and
   d) using Al-based Text-To-Speech (TTS) conversion on said receiver's terminal device, to generate synthesized speech reconstruction of said speech signals.
2. A method according to item 1, wherein the sender's voice characteristics is preserved by:
   a) transmitting the sender's speech metadata to the a receiver's terminal device, along with the text transcription; and
   b) generating the synthesized speech reconstruction of the speech signals, based on the received text transcription and said speech metadata.
3. A method according to item 1, wherein the text transcription is generated in real-time, for conducting a voice call between the sender and the receiver.
4. A method according to item 1, wherein the text transcription is generated offline, for conducting a voice messaging between the sender and the receiver.
5. A method according to item 1, further comprising fine-tuning the STT and TTS models for:
   a) specific languages;
   b) specific accents;
   c) specific domains.
6. A method according to item 1, wherein the data communication network is selected from the group of:
   - mobile networks;
   - 7VoIP systems;
   - satellite communication networks.
7. A method according to item 1, wherein the speech metadata is obtained by performing feature extraction of the voice characteristics of the sender, by the Al model at the sender's side.
8. A method according to item 1, wherein the receiver's terminal device is connected to emergency services.
9. A method according to item 1, wherein the STT and the TTS models are integrated with text-based collaboration tools, such as instant messaging and document sharing platforms.
10. A method according to item 1, wherein the offline voice messaging is applied to voice assistants and smart home devices.
11. A method according to item 1, wherein the Speech-to-Text (STT) model is trained on a diverse dataset of speakers with various accents, languages, and voice characteristics, to thereby ensure accurate transcription across a wide range of users and spoken languages.
12. A method according to item 1, wherein the Speech-to-Text (STT) model employs Al based techniques, Recurrent Neural Networks (RNNs) or transformer-based architectures, implemented as a single model, or as a series of interconnected models.
13. A method according to item 1, further comprising creating a voice profile that captures the unique characteristics of the sender's voice.
14. A method according to item 13, wherein the voice profile is stored on the sender's device and sent to the receiver on demand during a call.
15. A method according to item 1, wherein the receiver's terminal device maintains a list of voice profiles for his contacts.
16. A method according to item 1, wherein a third party stores voice profiles of all subscribers in a centralized database, to be sent to the receiver's device on demand, upon establishing a call.
17. A method according to item 1, further comprising compressing and packaging the text transcription before transmission.
18. A method according to item 1, further comprising utilizing the provided speech metadata by the TTS model, to reconstruct the speaker's voice, including prosody, intonation, and emotional cues.
19. A method according to item 1, further comprising protecting the communications by encrypting the text transcript and metadata before transmission.
20. A method for providing voice communication with efficient bandwidth utilization, comprising:
   a) receiving speech signals from a sender, as input to a sender's terminal device;
   b) using Al-based Speech-To- Speech (STS) conversion model on sender's terminal device, to generate an interim Speec to Embeddings (S2E) of said input speech signals;
   c) transmitting said interim Speec to Embeddings (S2E) to a receiver's terminal device, over a data communication network; and
   d) using said Al-based Speech-To- Speech (STS) conversion model and Embedding to Speech (E2S) conversion, to generate, on said receiver's terminal device, synthesized speech reconstruction of said speech signals,
   wherein communication between said receiver's and said sender's terminal devices encodes binary embeddings as text.
21. A method for providing voice communication with efficient bandwidth utilization, comprising:
   a) receiving speech signals from a sender, as input to a sender's terminal device;
   b) encoding/compressing the voice content at the sender's terminal device;
   c) transmitting the encoded/compressed voice content to a receiver's terminal device, over a data communication network; and
   d) on the receiver's terminal device, decoding the encoded/compressed voice content, to reconstruct said speech signals.
22. A method according to item 21, wherein encoding/compressing of the voice content, is implemented using STT and TTS models, or embedding using an STS model.
23. A system for providing voice communication with efficient bandwidth utilization, comprising:
   a) a sender's terminal device for receiving speech signals as an input from a sender;
   b) an Al-based Speech-To-Text (STT) conversion model, on said sender's terminal device, for generating a text transcription of said input speech signals, said sender's terminal device is adapted to transmit said text transcription to a receiver's terminal device, over a data communication network; and
   c) a receiver's terminal device being adapted to receive the transmitted text transcription and generate synthesized speech reconstruction of said speech signals using an Al-based Text-To-Speech (TTS) conversion model, running on said receiver's terminal device.

## Claims

1. A method for providing voice communication with efficient bandwidth utilization, comprising:
a) receiving speech signals from a sender, as input to a sender's terminal device;
b) using Al-based Speech-To-Text (STT) conversion on sender's terminal device, to generate a text transcription of said input speech signals;
c) transmitting said text transcription to a receiver's terminal device, over a data communication network; and
d) using Al-based Text-To-Speech (TTS) conversion on said receiver's terminal device, to generate synthesized speech reconstruction of said speech signals.

2. A method according to claim 1, wherein the sender's voice characteristics is preserved by:
a) transmitting the sender's speech metadata to the a receiver's terminal device, along with the text transcription; and
b) generating the synthesized speech reconstruction of the speech signals, based on the received text transcription and said speech metadata.

3. A method according to claim 1, wherein the text transcription is generated in real-time, for conducting a voice call between the sender and the receiver, or offline, for conducting a voice messaging between the sender and the receiver.

4. A method according to claim 1, further comprising one of the following steps:
a) fine-tuning the STT and TTS models for
a.1) specific languages;
a.2) specific accents;
a.3) specific domains;
b) creating a voice profile that captures the unique characteristics of the sender's voice;
c) compressing and packaging the text transcription before transmission;
d) comprising utilizing the provided speech metadata by the TTS model, to reconstruct the speaker's voice, including prosody, intonation, and emotional cues;
e) protecting the communications by encrypting the text transcript and metadata before transmission.

5. A method according to claim 1, wherein the data communication network is selected from the group of:
- mobile networks;
- 7VoIP systems;
- satellite communication networks.

6. A method according to claim 1, wherein the speech metadata is obtained by performing feature extraction of the voice characteristics of the sender, by the Al model at the sender's side.

7. A method according to claim 1, wherein the STT and the TTS models are integrated with text-based collaboration tools, such as instant messaging and document sharing platforms.

8. A method according to claim 1, wherein the offline voice messaging is applied to voice assistants and smart home devices.

9. A method according to claim 1, wherein the Speech-to-Text (STT) model is trained on a diverse dataset of speakers with various accents, languages, and voice characteristics, to thereby ensure accurate transcription across a wide range of users and spoken languages.

10. A method according to claim 1, wherein the Speech-to-Text (STT) model employs Al based techniques, Recurrent Neural Networks (RNNs) or transformer-based architectures, implemented as a single model, or as a series of interconnected models.

11. A method according to claim 4, wherein the voice profile is stored on the sender's device and sent to the receiver on demand during a call.

12. A method according to claim 1, wherein the receiver's terminal device maintains a list of voice profiles for his contacts.

13. A method according to claim 1, wherein a third party stores voice profiles of all subscribers in a centralized database, to be sent to the receiver's device on demand, upon establishing a call.

14. A method for providing voice communication with efficient bandwidth utilization, comprising:
a) receiving speech signals from a sender, as input to a sender's terminal device;
b) using Al-based Speech-To- Speech (STS) conversion model on sender's terminal device, to generate an interim Speec to Embeddings (S2E) of said input speech signals;
c) transmitting said interim Speec to Embeddings (S2E) to a receiver's terminal device, over a data communication network; and
d) using said Al-based Speech-To- Speech (STS) conversion model and Embedding to Speech (E2S) conversion, to generate, on said receiver's terminal device, synthesized speech reconstruction of said speech signals,
wherein communication between said receiver's and said sender's terminal devices encodes binary embeddings as text.

15. A method for providing voice communication with efficient bandwidth utilization, comprising:
a) receiving speech signals from a sender, as input to a sender's terminal device;
b) encoding/compressing the voice content at the sender's terminal device;
c) transmitting the encoded/compressed voice content to a receiver's terminal device, over a data communication network; and
d) on the receiver's terminal device, decoding the encoded/compressed voice content, to reconstruct said speech signals.

16. A method according to claim 15, wherein encoding/compressing of the voice content, is implemented using STT and TTS models, or embedding using an STS model.

17. A system for providing voice communication with efficient bandwidth utilization, comprising:
a) a sender's terminal device for receiving speech signals as an input from a sender;
b) an Al-based Speech-To-Text (STT) conversion model, on said sender's terminal device, for generating a text transcription of said input speech signals, said sender's terminal device is adapted to transmit said text transcription to a receiver's terminal device, over a data communication network; and
c) a receiver's terminal device being adapted to receive the transmitted text transcription and generate synthesized speech reconstruction of said speech signals using an Al-based Text-To-Speech (TTS) conversion model, running on said receiver's terminal device.
